Europäisches Patentamt

European Patent Office

Office européen des brevets

(11) Publication number: **0 450 446 A2**

# EUROPEAN PATENT APPLICATION

(21) Application number: 91104666.2

(51) Int. Cl.5: **G09G 1/16**

(22) Date of filing: 25.03.91

(30) Priority: 23.03.90 JP 73642/90

(43) Date of publication of application:
09.10.91 Bulletin 91/41

(84) Designated Contracting States:
DE FR GB

(71) Applicant: **KABUSHIKI KAISHA TOSHIBA**
72, Horikawa-cho Saiwai-ku
Kawasaki-shi Kanagawa-ken 210(JP)

Applicant: **TOSHIBA MICRO-ELECTRONICS**
**CORPORATION**
25-1, Ekimaehoncho
Kawasaki-ku Kawasaki-shi(JP)

(72) Inventor: **Uchida, Kazuaki, D-14, Daini**
**Wakakusa Ryo**
4-6, Komukai-Nishi-Machi, Saiwai-Ku
Kawasaki-Shi, Kanagawa-Ken(JP)
Inventor: **Kobayashi, Atsushi**
212, Mita Sakuradai Daisan Copo, 2-5-2,
Toyotama
Kami, Nerima-ku, Tokyo-To(JP)

(74) Representative: **Lehn, Werner, Dipl.-Ing. et al**
**Hoffmann, Eitle & Partner Patentanwälte**
**Arabellastrasse 4**
**W-8000 München 81(DE)**

(54) Screen display circuit.

(57) A screen display circuit having a display memory (15) and a code discriminating and controlling circuit (18). The display memory (15) stores a character storage address and a display control code as different data. The code discriminating/controlling circuit (18) discriminates if the output data read from the display memory is the character storage address or the display control code. In accordance with whether the output data from the display memory (18) is the character storage address or the display control code, the transfer destination of the output data is changed. It is not necessary to have a display control code for each display character, thereby reducing the size of the display memory.

FIG.1

## BACKGROUND OF THE INVENTION

The present invention relates to a screen display circuit, and more particularly to a screen display circuit built in a television receiver for displaying a receiving channel number, the loudness of sound, or the like.

For a recent television receiver, a receiving channel number, the loudness of sound, or the like has been arranged to be displayed on the screen. Such arrangement is now becoming common as a television remote controller is used widely.

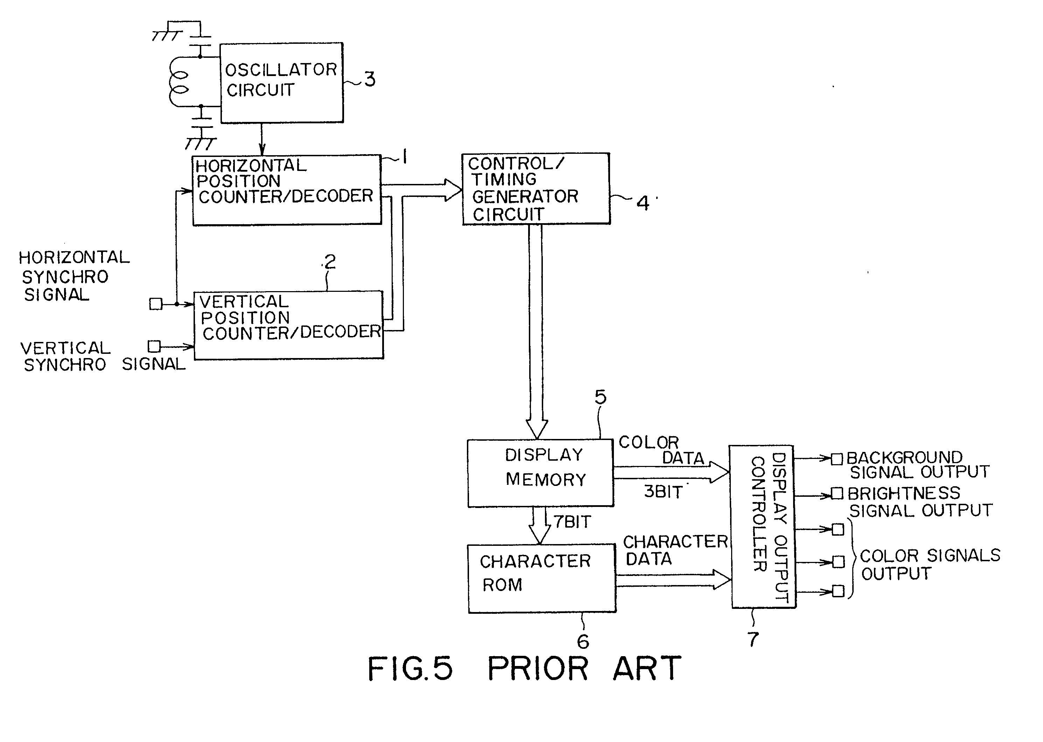

Fig. 5 is a block diagram showing an example of a conventional screen display circuit. A horizontal synchro signal is supplied from the external circuit to a horizontal position counter/decoder 1 and a vertical position counter/decoder 2. A vertical synchro signal is supplied from the external circuit to the vertical position counter/decoder 2. A signal having a predetermined frequency (generally several MHz) generated by an oscillator circuit 3 is supplied to the horizontal position counter/decoder 1. The outputs from the horizontal position counter decoder 1 and vertical position counter/decoder 2 are supplied to a control/timing generator circuit 4 which generates a control/timing signal and supplies it to a display memory 5. This control/timing signal is used for designating an address of the display memory 5.

Fig. 6 shows the contents of a conventional display memory. For each of characters 1 to n, there are provided a character ROM address of 7 bits, 3 color designating bits for designating a color, and 1 blink object bit. This blink object bit indicates if a designated character is to be blinked, i.e., to be displayed or not. Thus, the conventional display memory requires 11 bits in total for each character.

When an address of the display memory 5 is designated by a control/timing signal from the control/timing generator circuit 4, an address of a character ROM is supplied from the display memory 5 to a character ROM 6. Three color bits and one blink object bit are supplied to a display output controller 7. A character display data stored in the form of dot matrix in the character ROM 6 at the designated character ROM address is read and supplied to the display output controller 7. The display output controller 6 outputs a background signal, a brightness signal, and three color signals to a display tube.

The above-described conventional screen display circuit has three color designating bits and one display disable/enable bit for each character to be displayed. Therefore, the size of the display memory becomes large.

Furthermore, if a number of display character colors are to be changed, color designating bits for the characters are required to be set, thereby increasing the write time to the display memory.

## SUMMARY OF THE INVENTION

It is therefore an object of the present invention to provide a screen display circuit capable of reducing the size of a display memory and improving the efficiency of the display memory.

According to the screen display circuit of this invention, there is provided a screen display circuit comprising: a control/timing generator circuit for generating a control signal at a predetermined timing in accordance with a horizontal/vertical synchro signal; a display memory whose address is designated by an output from the control/timing generator circuit, the display memory storing at the designated address a storage address of a display character and a control code as control information; a character memory for storing a display character data of a character to be displayed at each address; a display output control unit for generating a display output in accordance with the display character data and the control code outputted from the character memory; and a discriminating circuit provided between the display memory and the character memory for discriminating the output contents of the display memory, and sending the storage address of a display character to the character memory and sending the control code directly to the display output control unit.

According to the present invention, a display memory stores a color designating bit, display disable/enable bit, and the like for each character in the form of a control code which is different from a character code data designating a storage address of the character. An output from the display memory is discriminated by a code discriminating and controlling circuit if it is a character storage address or a display control code. The character storage address and the display control code thus discriminated are transferred to a suitable circuit portion. With such an arrangement, it is possible to reduce the size of the display memory and freely define various types of display control codes irrespective of the number of bits in the display memory, thereby providing the control versatility of display characters.

## BRIEF DESCRIPTION OF THE DRAWINGS

In the accompanying drawings,
Fig. 1 is a block diagram showing the outline of a screen display circuit according to the present invention;
Fig. 2 illustrates the contents of data stored in the display memory shown in Fig. 1;
Fig. 3 illustrates how the data stored in the display memory is assigned specific codes;

Fig. 4 shows an example of a circuit diagram of the code discriminating and controlling circuit;

Fig. 5 is a block diagram showing the outline of a conventional screen display circuit; and

Fig. 6 illustrates the contents of data stored in a conventional display memory.

## DESCRIPTION OF THE PREFERRED EMBODIMENT

An embodiment of this invention will be described with reference to the accompanying drawings.

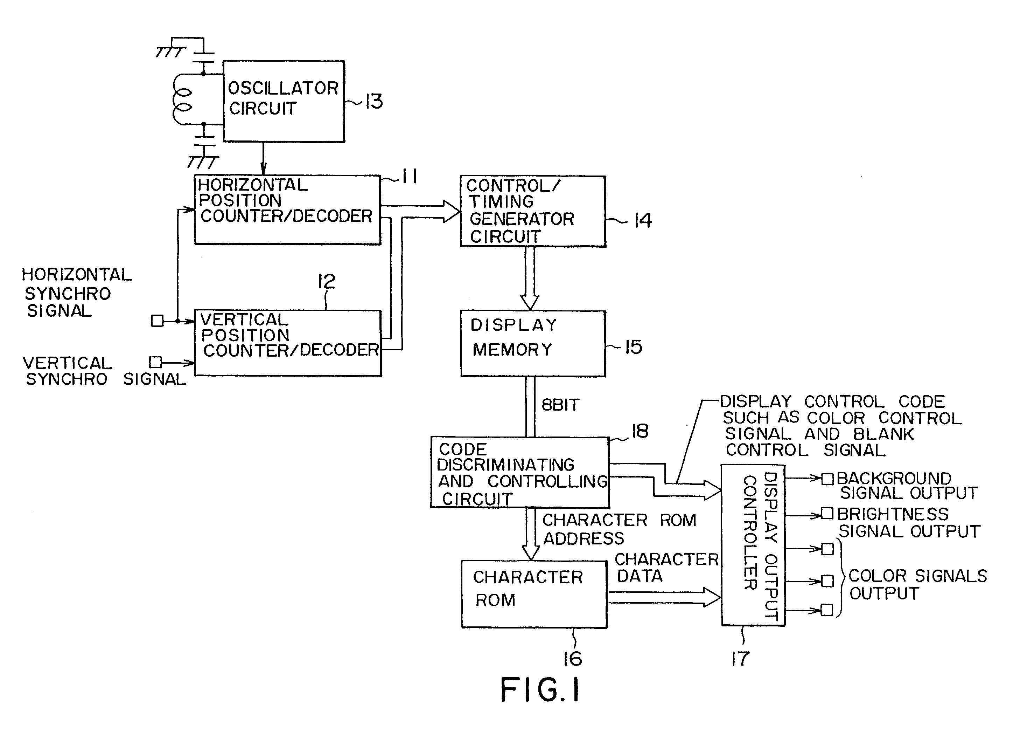

Fig. 1 is a block diagram of the screen display circuit according to an embodiment of this invention. A horizontal position counter/decoder 11, vertical position counter/decoder 12, oscillator circuit 13, control/timing generator circuit 14, display memory 15, character ROM 16, and display output controller 17 are similar to those of a conventional circuit shown in Fig. 5, so the detailed description thereof will be omitted. The one's digit of each reference numeral corresponds to the reference numeral of the conventional circuit shown in Fig. 5. The different points from the conventional circuit shown in Fig. 5 are the contents of the display memory 15 and a provision of a code discriminating and controlling circuit 18 between the display memory 15 and the character ROM 16. As will be later described, this code discriminating and controlling circuit 18 selectively outputs either a character storage address or a display control code in accordance with the contents of the display memory 15.

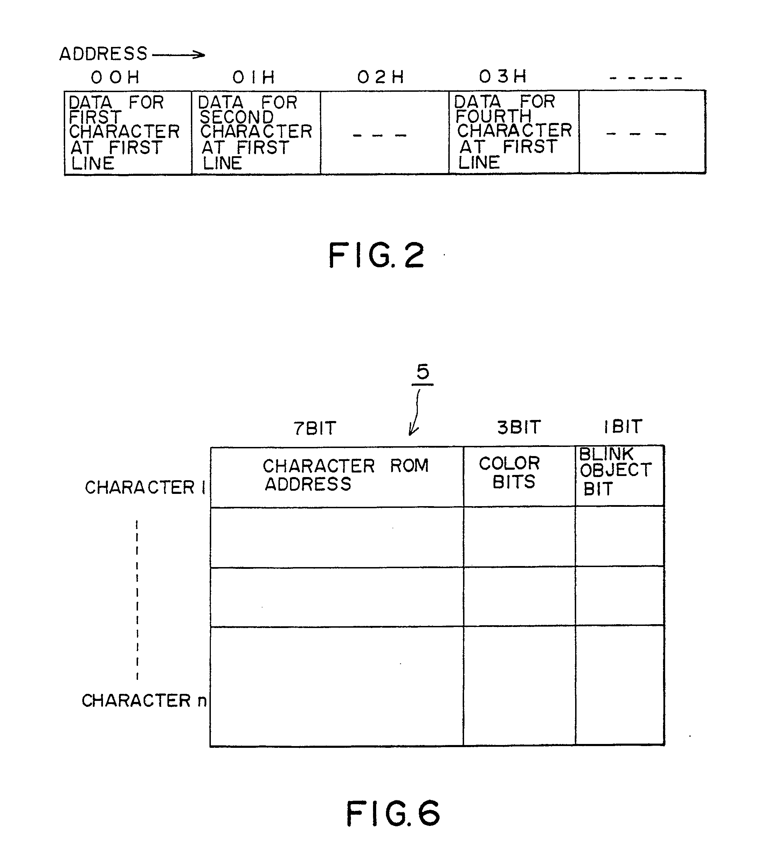

As seen from Fig. 2 illustrating the contents of the display memory, one character data (in this embodiment, 8 bit data) is stored in the display memory 15 at each address.

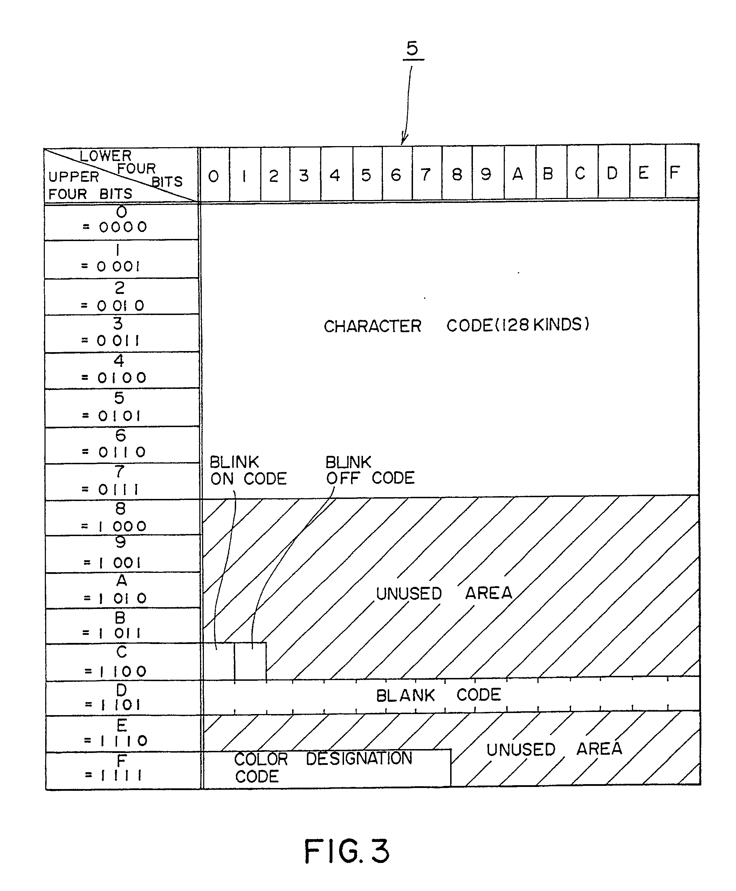

Fig. 3 illustrates how the data stored in the display memory 15 are assigned to specific codes. Various codes are assigned to each data by using a combination of upper four bits and lower four bits.

As seen from Fig. 3, for the upper four bits from 0 = 0000 to 7 = 0111, i.e., for the four bits having MSB "0", there are assigned 128 character ROM addresses (character codes) from hexadecimal 00 to 7F. For the upper four bits from 8 = 1000 to F = 1111, i.e., for the four bits having MSB "1", there is assigned information other than character codes.

For example, C0 = 11000000 is assigned a blink-on code. Display characters after this code are flushed (i.e., displayed). Similarly, C1 = 11000000 is assigned a blink-off code. Display characters after this code are not flushed. D0 to DF are assigned a blank code for displaying a blank character. D0 is for one digit blank character, and DF is for 16 digits blank characters. F0 to F7 are assigned a color designation code. For example, F0 is for black, F1 is for blue, F2 is for green, F4 is for red, and etc., maximum eight colors being designated.

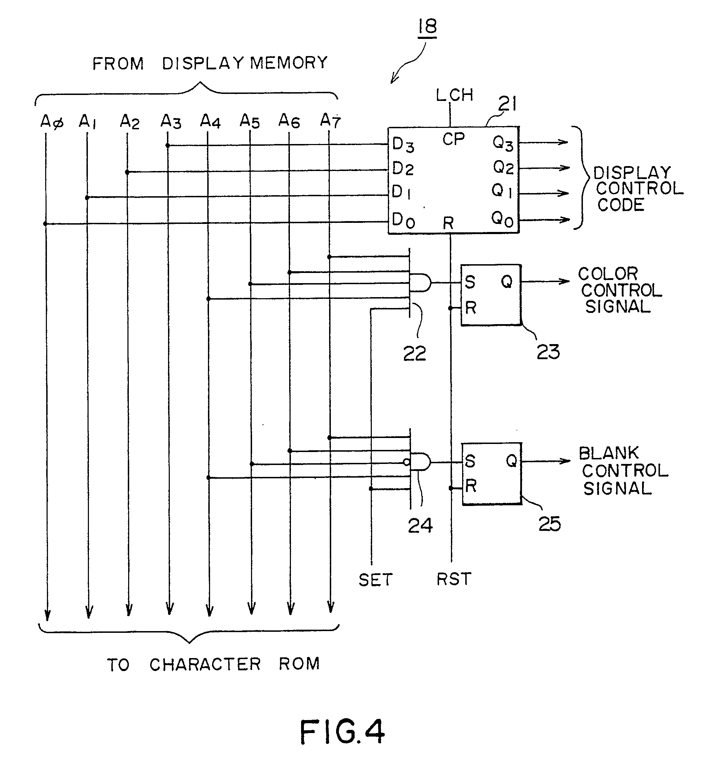

Fig. 4 is a circuit diagram showing the code discriminating and controlling circuit 18.

Eight lines A0 to A7 from the display memory 15 are connected to the character ROM 16. The lower four bit lines A0 to A3 are connected to D0 to D3 terminals of a D-type flip-flop 21. A latch pulse LCH is supplied to a CP terminal of the flip-flop 21, and a reset pulse is supplied to an R terminal. A display control code is outputted from output terminals Q0 to Q3. The upper four bits A4 to A7 undergo an AND operation with a set pulse SET by an AND gate 22, the output thereof being supplied to a set terminal S of an RS flip-flop 23. A reset terminal thereof is supplied with the reset pulse RST. A Q output is a color control signal. As a result, if the upper four bits are 1111, a color data is picked up and the contents thereof are determined by the lower four bits.

Similarly, the upper four bits A4 to A7 undergo an AND operation with the set pulse SET by an AND 24, the output thereof being supplied to a set terminal S of an RS flip-flop 25 which outputs a blink control signal. Since the A5 input terminal of the AND gate 24 is an inverted input terminal, a blink control signal is outputted if the upper four bits are 1101, and the contents thereof are determined by the lower four bits.

In display operation, during a first read cycle, a character code is read from the display memory 15, and then a display control code for this character is read. If the display contents change, only the changed display contents are read. Therefore, for example, if only a display character changes with the display color being maintained unchanged, only the changed character code is outputted.

Data read from the display memory 15 in the above-described manner is discriminated by the code discriminating and controlling circuit 18. The code discriminating and controlling circuit 18 checks the MSB information supplied from the display memory 15. If MSB = 0, the data is recognized as a character code, and if MSB = 1, the data is recognized as a display control code. The transfer destination of the data is therefore changed in accordance with such discrimination. Namely, a character code is sent to the character ROM 16, and a display control code is sent to the display output controller 17. In accordance with the contents of the upper four bits, the color control signal and the blink control signal are picked up and sent to the display output controller 17. As a result, a character display data read from the character ROM 16 is displayed in the display style designated by a display control code directly supplied from the display memory to the display output controller 17. Characters are therefore displayed on the screen in the display style designated by the background signal, brightness signal, and color signals. In contrast to a conventional display memory having eleven bits per character one, this invention system requires only 8 bits per character. A practical equipment often uses 100 or more characters so that the memory capacity can be reduced considerably.

The present invention uses different cycles for reading a display character data and reading a control code. Therefore, the invention is particularly suitable for displaying characters whose display style does not change frequently.

In the above embodiment, as the display control code, the color data and blank-on/off data are described by way of example. The invention is not limited thereto, but various display control data can be used.

Also in the above embodiment, although the display memory number has eight bits per character, any number of bits may be used.

**Claims**

1. A screen display circuit comprising:

a control/timing generator circuit (14) for generating a control signal at a predetermined timing in accordance with a horizontal/vertical synchro signal;

a display memory (15) whose address is designated by an output from said control/timing generator circuit, said display memory storing at said designated address a storage address of a display character and a control code as control information;

a character memory (16) for storing a display character data of a character to be displayed at each address;

a display output control unit (17) for generating a display output in accordance with said display character data and said control code outputted from said character memory; and

a discriminating circuit (18) provided between said display memory and said character memory for discriminating the output contents of said display memory, and sending said storage address of a display character to said character memory and sending said control code directly to said display output control unit.

2. A screen display circuit according to claim 1, wherein the contents of the control by said control code are at least one of designating a color, display disabling/enabling, and changing a display position.

3. A screen display circuit according to claim 1, wherein said display memory stores said storage address and said control code as different data which is discriminated by the most significant bit.

4. A screen display circuit according to claim 1, wherein said control/timing generator circuit reads said display character data and said control code from said display memory at different cycles, and if the display style changes, reads only the changed portion.

```
              ┌──────────────┐
  ╫──╢        │ OSCILLATOR   │──13
   ⌇ ╢        │ CIRCUIT      │
   ⌇ ╢        └──────┬───────┘
  ╫──╢               │
                     ▼
              ┌──────────────┐ ~11    ┌──────────────┐
              │ HORIZONTAL   │        │ CONTROL/     │
          ┌──▶│ POSITION     │───────▶│ TIMING       │──14
          │   │COUNTER/DECODER│       │ GENERATOR    │
          │   └──────┬───────┘        │ CIRCUIT      │
 HORIZONTAL │        │                └──────┬───────┘
 SYNCHRO    │        │                       │
 SIGNAL     │    12  │                       ▼
       □────┤   ┌────┴─────────┐       ┌──────────────┐
            └──▶│ VERTICAL     │       │ DISPLAY      │──15
                │ POSITION     │       │ MEMORY       │
 VERTICAL  □───▶│COUNTER/DECODER│      └──────┬───────┘
 SYNCHRO SIGNAL └──────────────┘              │
                                            8BIT
```

DISPLAY CONTROL CODE
SUCH AS COLOR CONTROL
SIGNAL AND BLANK
CONTROL SIGNAL

CODE DISCRIMINATING AND CONTROLLING CIRCUIT — 18

DISPLAY OUTPUT CONTROLLER — 17

→ □ BACKGROUND SIGNAL OUTPUT

→ □ BRIGHTNESS SIGNAL OUTPUT

CHARACTER ROM ADDRESS

CHARACTER DATA

CHARACTER ROM — 16

→ □
→ □  COLOR SIGNALS OUTPUT
→ □

FIG.1

ADDRESS ──→

| 0 0 H | 0 1 H | 0 2 H | 0 3 H | ----- |
|---|---|---|---|---|
| DATA FOR FIRST CHARACTER AT FIRST LINE | DATA FOR SECOND CHARACTER AT FIRST LINE | --- | DATA FOR FOURTH CHARACTER AT FIRST LINE | --- |

# FIG. 2

5

|  | 7BIT CHARACTER ROM ADDRESS | 3BIT COLOR BITS | 1BIT BLINK OBJECT BIT |
|---|---|---|---|
| CHARACTER 1 |  |  |  |
|  |  |  |  |
|  |  |  |  |
| CHARACTER n |  |  |  |

# FIG. 6

FIG. 3

FIG.4

FIG.5 PRIOR ART